# EUROPEAN PATENT SPECIFICATION

(11) **EP 3 728 957 B1**
(45) Date of publication and mention of the grant of the patent: **11.11.2026**
(21) Application number: 18840086.5
(22) Date of filing: 20.12.2018
(51) Int. Cl.: F24D 19/00, B03C 1/033, C02F 1/68, F24D 19/08

(54) **ASSEMBLY FOR CLEANING AND/OR PROTECTING A LIQUID CONDUIT SYSTEM**
VORRICHTUNG ZUM REINIGEN UND/ODER SCHÜTZEN EINES FLÜSSIGKEITSLEITUNGSSYSTEMS
ENSEMBLE DE NETTOYAGE ET/OU DE PROTECTION D'UN SYSTÈME DE CONDUITE DE LIQUIDE

(30) Priority: 22.12.2017 NL 2020167
(43) Date of publication of application: 28.10.2020
(73) Proprietor: Aalberts hfc B.V., 1358 DB Almere (NL)
(72) Inventor: REEZIGT, Herman, 8072 HJ Nunspeet (NL); MUNNIK, Koert Arthur, Harrogate, Yorkshire GH2 9AY (GB)
(74) Representative: EP&C
(86) International application number: PCT/NL2018/050866
(87) International publication number: WO 2019/125161

(56) References cited:
- WO-A1-2008/023156
- WO-A1-2016/092351
- DE-U1- 202010 003 430
- NL-B1- 2 014 366
- US-A- 5 218 983
- US-A1- 2011 094 949
- US-A1- 2014 345 459

## Description

### FIELD OF THE INVENTION

The present invention relates to an assembly for cleaning and/or protecting a liquid conduit system, in particular a closed liquid conduit system of a central heating device. The present invention further relates to a combination of a dosing unit and a removal device for removing gas bubbles and/or dirt particles from a liquid in the liquid conduit system or for removing a second liquid from a first liquid in the conduit system. The present invention yet further relates to a package.

### BACKGROUND OF THE INVENTION

Many conduit systems in which a liquid is conveyed have issues of contaminations in the liquid. This is in particular the case with closed circuits, wherein a liquid may be circulated for a long time period. Such systems are for instance used for heating purposes. Over time, gas bubbles, magnetite particles and dirt particles may contaminate the liquid and may deteriorate the functioning of the closed circuit, for instance because the system becomes clogged, or because valves do not function very well. Over time, different devices have been developed for removing gas bubbles and/or dirt particles.

The conduits of the conduit system, or components of the conduit system like couplings or valves, are usually made of a metal. Metals are prone to corrosion. A way to protect the conduit system against corrosion, is by adding chemicals into the system. The chemicals are usually poured into the liquid conduit system, for example via an opening in a device which is connected to the conduit system. As the chemicals may be toxic or hazardous for the user, spilling the chemicals involves health and safety risks. Pouring the chemicals into the system requires not only precision, but it also requires time.

When a bottle with chemicals is emptied into the device, the chemicals are located in the device and subsequently flow into the liquid conduit system. There is no dosage control, as the chemicals dissolve completely upon pouring into the device. Dosing the chemicals may be advantageous, because as the liquid flowing through the conduit system is circulated, dissolving all chemicals at once may lead to an uneven distribution of the chemicals in the conduit system, or on the pipe's inner surface in case of the corrosion inhibitor. Furthermore the high concentrations of chemicals in the liquid then may negatively influence the performances of the central heating device. The suddenly occurring flood of highly concentrated chemicals flowing through the conduit system may even lead to a damaging or deterioration of certain vulnerable components of the central heating device, like seals, valves or the like.

Document NL 2 014 366 B1 discloses a combination unit comprising the features of the preamble of independent claim 1.

The present invention aims to at least partly overcome the above disadvantages or to provide a usable alternative. In particular the invention is based on the insight that there is a need for a more efficient way of cleaning and/or protecting a liquid conduit system.

### SUMMARY OF THE INVENTION

In a first aspect, the invention has as objective to provide an assembly which provides a more efficient way of cleaning and/or protecting a liquid conduit system. This objective is achieved by a combination of a removal device and a dosing unit according to claim 1 and an assembly for cleaning and/or protecting a liquid conduit system according to claim 6.

An advantage of the assembly is that by using tablet containing the chemical additives, there is less risk of spilling. This is beneficial from a health and safety point of view. Another advantage of using tablet containing the chemical additives, is that different types of additives may be combined, resulting in a single product to be added to the conduit system. This is more efficient than separately providing different types of additives. Different types of additives may for example prevent corrosion or limescale.

Combining a gas removal device and chemicals has a benificial synergetic effect, for the gas bubbles that may cause diffusion with the corrosion inhibitor are removed from the liquid conduit system.

In an embodiment of the assembly, the dosing unit is directly provided on the removal device, and wherein in particular the dosing unit and the removal device are integrated to form a single product with a common housing, and wherein more in particular the common housing of the removal device and the dosing unit comprises the external opening and the closing member.

An advantage of providing the dosing unit in the removal device is a better dosage of the tablet containing the chemical additives into the liquid conduit system. As the flow velocity in the inner space may be lower than the flow velocity in the main channel, the tablet containing the chemical additives may dissolve more controlled when being provided in the inner space. Also a single product is more cost efficient compared to two separate products.

In an embodiment of the assembly, the inner space is arranged adjacent to the main channel.

An advantage is that the flow velocity in the inner space may be lower than the flow velocity in the main channel. This provides a more controlled dosing of the chemical additives when being provided in the inner space.

In an embodiment of the assembly, the dosing unit and in particular the holder thereof comprises at least one magnet for attracting magnetite particles. By providing a magnet on the holder, two functions are combined, namely facilitating dosing of the chemical additives, and separating magnetite particles from the liquid.

In an embodiment of the assembly, the holder comprises a base and at least one side wall extending from the base, and wherein a hollow member extends from the base, the hollow member accommodating the at least one magnet while extending into the inner space.

Positioning the magnet in the inner space has as advantage that the flow entering the inner space comes in contact with the magnet, directly or indirectly via the hollow member. Positioning the magnet in the inner space adjacent the branch off opening improves this effect even more.

In an embodiment of the assembly, the hollow member comprises a closed end away from the base and an open end corresponding with an opening in the base, wherein the at least one magnet is provided into the hollow member via the open end. This arrangement also allows the magnet to be removed from the hollow member. In case the holder is not removable from the common housing, the magnet may still be removed, thereby allowing any attached magnetite particles to detach from the hollow member and to settle to a lower end of the inner space, where the magnetite particles may be removed via a dirt discharge.

In an embodiment of the assembly, the magnet is removable from the holder.

By removing the magnet from the holder, magnetite particles attached to the magnet may be removed from the liquid conduit system. In case the magnet is provide in the hollow member in the inner space of the removal device, the magnetite particles that are attached to an outer surface of the hollow member, detach from the outer surface after removal of the magnet. The magnetite particles then settle to a lower end of the inner space, where they can be removed.

In an embodiment of the assembly, the holder is removable from the dosing unit. The holder may be removed via the external opening. In case the holder may become damaged, the holder can be easily replaced without having to replace the entire dosing unit or combination.

In an embodiment, the holder comprises the tablet containing the chemical additive.

An advantage is that the tablet containing the chemical additive may be placed in the holder when the holder is not located in the dosing unit, such that the holder comprising the tablet is provided in the dosing unit as one package.

In an embodiment of the assembly, the holder is provided in an upper end of the inner space and in particular is manually accessible via the external opening which is provided at a top end of the common housing.

In an embodiment, the external opening and the closing member are provided at the upper end of the housing.

The upper end arrangements have as an advantage that the holder is easily accessable, while the removal device may maintain its orientation. Flushing of the removal device is not necessary, which would be necessary in case the external opening would be provided at a bottom end of the inner space. For the removal of the holder, the same advantages apply.

In an embodiment of the assembly, the holder, and in particular a base and/or at least one side wall thereof, comprises at least one through hole or recess via which it is in fluid communication with the liquid conduit system or with the main channel or with the inner space of the removal device.

The through hole or recess provides a passage for a flow to the tablet containing the chemical additives, thereby improving the dosing facilitation.

In an embodiment of the assembly, the closing member comprises a de-aerator valve.

This way, two functions are combined, leading to a more efficient assembly. In case the valve may become damaged, only the closing member with the valve has to be replaced, instead of the entire combination.

In an embodiment of the assembly, the chemical additive comprises a powder in the form of a tablet and/or a fluid encapsulated by a soluble film. A fluid encapsulated by a soluble film is also referred to as a capsule. The powder may be compressed and/or bonded by an adhesive in order to form the tablet.

An advantage of a tablet, is that a user may simply and quickly provide the tablet containing the chemical additives in the liquid conduit system. Compared to pouring a fluid chemical liquid, wherein the pouring takes a lot of time and precision, the tablet can be placed in the holder with a simple and quick action.

Another advantage of the tablet is that it becomes easier to provide the correct amount of chemical additives to the liquid conduit system. When dimensions or a circulating volume of the total conduit system are known, an amount of chemical additives may be determined. The determined amount may then correspond to a number of tablets or to a particular dosage of the tablet. This enables easy dosing.

An advantage of the tablet comprising powder is that the tablet may dissolve gradually and slowly, thereby allowing a more controlled dosing of chemical additives into the conduit system. For a capsule with fluid, this is less advantageous, because once the outer film is dissolved, the entire amount of fluid is immediately dissolved in the conduit system. Another advantage of a compressed powder over a fluid, is that with a powder generally higher concentrations may be obtained for the same volume.

An advantage of the tablet is that the tablet may dissolve gradually and slowly, thereby allowing a more controlled dosing of chemical additives into the conduit system.

The combination of a dosing unit and a removal device for removing gas bubbles and/or dirt particles from a liquid in the liquid conduit system according to claim 1 provides the same advantages as the assembly.

In an embodiment of the combination, the dosing unit is directly provided on the removal device, and wherein in particular the dosing unit and the removal device are integrated to form a single product with a common housing, and wherein more in particular the common housing of the removal device and the dosing unit comprises the external opening and the closing member.

In an embodiment of the combination, the holder is removable from the dosing unit via the external opening.

In an embodiment of the combination, the holder comprises at least one magnet for attracting magnetite particles.

In an embodiment of the combination, the holder comprises the tablet containing the chemical additive.

In an embodiment, the combination comprises a base, and wherein a hollow member extends from the base, the hollow member accommodating the at least one magnet while extending into the inner space.

In an embodiment of the combination, the holder is provided in an upper end of the inner space and is manually accessible via the external opening which is provided at a top end of the common housing.

The invention yet further relates to a method of cleaning and/or protecting a liquid conduit system, the method comprising:
a) providing an assembly according to any of claims 6-14 or a combination according to any of claims 1-5
b) opening the external opening with the closing member,
c) providing the tablet containing the chemical additive in the holder,
d) closing the external opening with the closing member,
e) guiding a flow of liquid through the assembly.

In an embodiment of the method, the tablet containing the chemical additive is already provided in the holder, and step c) comprises providing the holder comprising the tablet containing the chemical additive, in particular the package according to claim 15, into the dosing unit.

An advantage of this method is similar to said advantage of the package, wherein there is less risk for the user to come in contact with the chemical additive.

### BRIEF DESCRIPTION OF THE DRAWINGS

Embodiments of the system and the method will be described by way of example only, with reference to the accompanying schematic drawings in which corresponding reference symbols indicate corresponding parts, and in which:
Figure 1 schematically shows an assembly for cleaning and/or protecting a liquid conduit system according to the invention,
Figure 2 schematically shows a perspective view of an embodiment of a removal device and a dosing unit according to the invention,
Figure 3 schematically shows a perspective view of a cross-section of the embodiment of figure 2,
Figure 4 schematically shows a cross-sectional view of the embodiment of figure 2,
Figure 5 schematically shows a perspective view of a holder according to the invention.

### DETAILED DESCRIPTION OF THE DRAWINGS

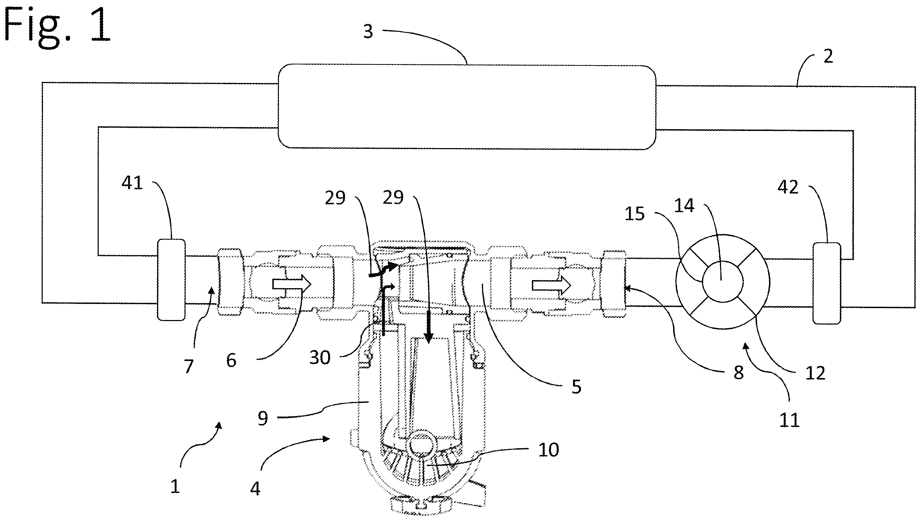

Turning to figure 1, an assembly 1 for cleaning and/or protecting a liquid conduit system 2, in particular a closed liquid conduit system 2 of a central heating system 3, according to the invention is shown.

The assembly 1 comprises a domestic liquid conduit system 2. A domestic liquid conduit system typically comprises a volume up to 750 liters. Small houses typically have conduit systems comprising volumes of about 100 liters. The assembly 1 further has a removal device 4 for removing gas bubbles and/or dirt particles from a liquid in the liquid conduit system 2. The removal device 4 may also be configured to remove a second liquid from a first liquid in the conduit system 2. The removal device 4 has a main channel 5 for a main flow 6. The main channel 5 has an entry 7 and an exit 8 which are connected to the liquid conduit system 2. The removal device 4 has a housing 9 which defines an inner space 10. The inner space 10 is in fluid communication with the main channel 5.

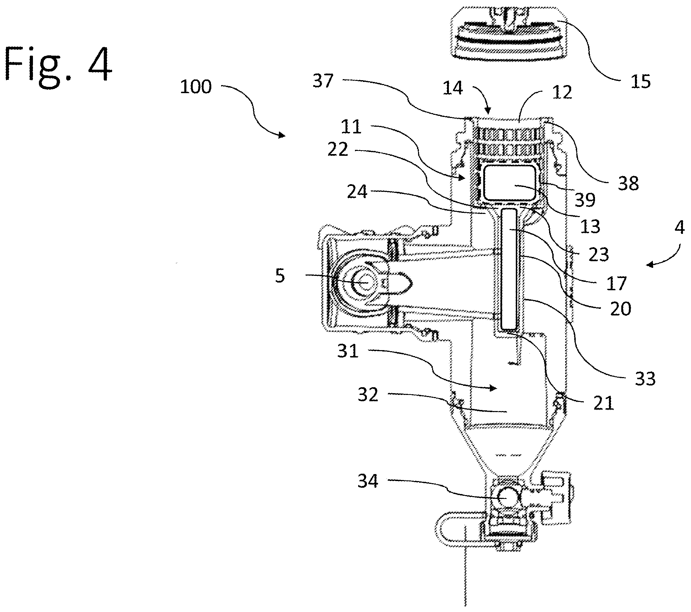

The main flow 6 will enter the removal device 4 via the entry 7, after which at least a part 29 of the main flow 6 is branched off to the inner space 10. In the inner space 10 there is a quiet zone 31 (figure 4) where in use the liquid has a substantially smaller velocity than in the main channel 5. The quiet zone 31 allows dirt particles or a relatively heavy liquid to settle at a lower end 32 of the inner space 10 and/or gas bubbles or a relatively light liquid to rise to an upper end 24 of the inner space 10. The treated flow 30 flows back into the main channel 5 after which it recirculates through the liquid conduit system 2. Other arrangements are also possible, where different dirt removal principles are used, such as centrifugal or filtering.

The assembly 1 further comprises a dosing unit 11. The dosing unit 11 comprises a holder 12 which is in fluid communication with the liquid conduit system 2 via which it is also in fluid communication with the main channel 5 and with the inner space 10 of the removal device 4. The holder 12 is configured to accommodate a tablet containing the chemical additive 13 (figure 4) and to dose the tablet containing the chemical additive 13 into the liquid conduit system 2.

The assembly 1 is provided with an external opening 14 through which the holder 12 is manually accessible from the outside. A closing member 15 for opening and closing the external opening 14 is also provided.

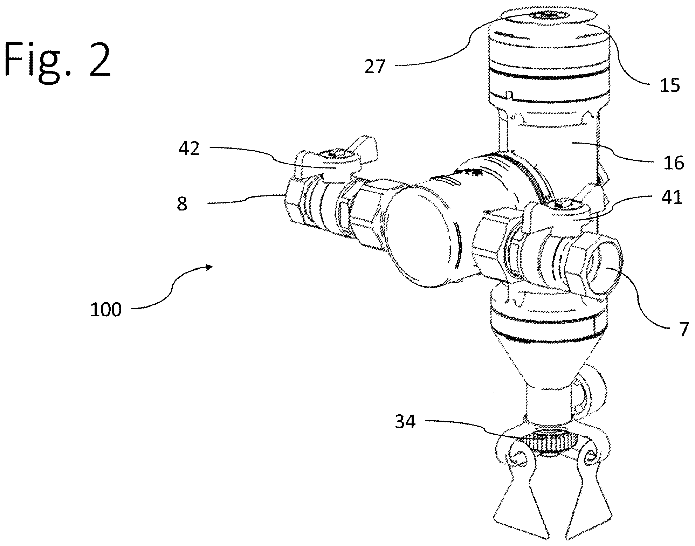

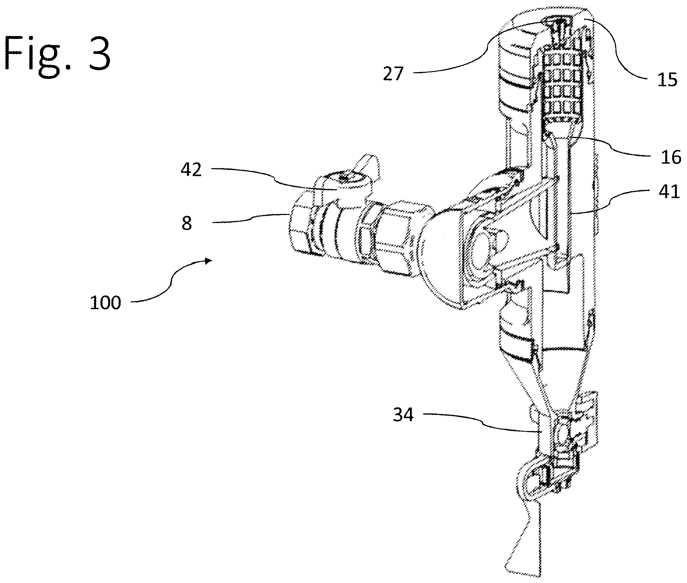

Whereas the removal device 4 and the dosing unit 11 may be provided separately, figures 2, 3 and 4 show an embodiment of a combination 100 of the removal device 4 in which the dosing unit 11 is integrated. The dosing unit 11 is directly provided on the removal device 4. The dosing unit 11 and the removal device 4 are integrated to form a single product with a common housing 16, which common housing 16 is elongate. The common housing 16 of the removal device 4 and the dosing unit 11 comprises the external opening 14 and the closing member 15. The closing member 15 is further provided with a de-aerator valve 27 for allowing gas bubbles to exit 8 the inner space 10.

The dosing unit 11 and in particular the holder 12 thereof comprises at least one magnet 17 for attracting magnetite particles.

The holder 12 has a base 18 and at least one side wall 19 extending from the base 18. The side wall 19 is cylindrical and corresponds to the shape of an upper end of the inner space 10. A hollow member 20 extends from the base 18 and accommodates the at least one magnet 17 while extending into the inner space 10.

The hollow member 20 has a closed end 21 located away from the base 18 and an open end 22 corresponding with an opening 23 in the base 18. The at least one magnet 17 is provided into the hollow member 20 via the open end 22.

The at least one magnet 17 may therefore also be removable from the holder 12 via the open end 22. When removing the magnet 17 after a long period of use, the magnetite particles that are attached to an outer surface 33 of the hollow member 20, become detached and settle to the lower end 32 of the inner space 10. At the lower end 32, the magnetite particles are removed together with any dirt particles via a dirt discharge 34.

The holder 12 is provided in an upper end 24 of the inner space 10. An upper end 36 of the side wall 19 of the holder 12 comprises an outwardly projecting ridge 37 which is supported by a supporting ridge 38 provided at the upper end 24 of the inner space 10. This provides a simple construction for maintaining the holder 12 in place.

As the inner space 10 is adjacent to the main channel 5, the flow velocity in the inner space may be lower than the flow velocity in the main channel. Adjacent to in this context means next to, or apart from.

The holder is manually accessible via the external opening which is provided at a top end of the common housing.

The holder 12 is removable from the dosing unit 11, thereby being also removable from the housing 9. In order to remove the holder 12, the closing member 15 which is provided at a top end 35 of the housing 9 is removed first. In the shown embodiment, this is done via a thread coupling. Other arrangements are also possible. Then the holder 12 is lifted upwards and removed from the dosing unit via the external opening.

In figure 4, the tablet containing the chemical additive 13 is shown. The tablet may comprise solid, compressed powder, or a fluid encapsulated by a soluble outer film 39. The compressed powder may also be provided, or encapsulated, with soluble outer film 39, as shown in figure 4. An advantage of an outer film, is that the outer film usually is less toxic or hazardous compared to the chemical additive, so that the outer film may be touched. This way, the tablet with an outer film can be positioned in the holder by hand. The chemical additives 13 may comprise a cleaner, a protector or any other additive which is beneficial for the liquid conduit system 2, or any combination thereof.

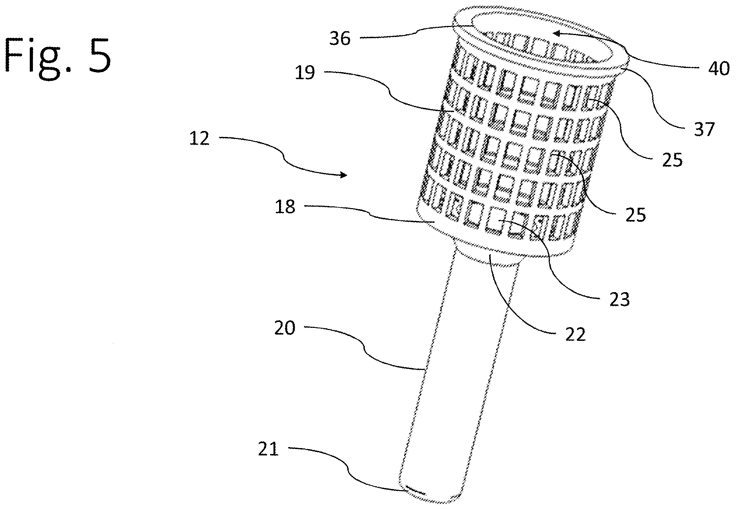

Figure 5 shows an embodiment of the holder 12. The side wall 19 has multiple through holes 25. Also the base 18 may be provided with a through hole 25. Besides a through hole 25, also a recess may be provided extending from the end of the side wall 19 away from the base 18. The through hole 25 or recess facilitates in the dosing of the tablet containing the chemical additives 13 by providing a passage for a flow to the tablet containing the chemical additives 13.

The base 18 and the side wall 19 define an inner volume for accommodating the tablet containing the chemical additive 13, the base 18 being configured to support the tablet containing the chemical additive 13. The side wall 19 defines an insertion opening at an end away from the base 18. The insertion opening provides a passage for the tablet containing the chemical additive 13 into the holder 12. The insertion opening is arranged adjacent the external opening 14 of the common housing 16.

### Operation

In operation, the assembly 1 for cleaning and/or protecting a liquid conduit system 2 according to the invention is provided. A liquid flow is circulated through the conduit system 2 and passes the removal device 4 and the dosing unit 11. In order to be able to position the tablet containing the chemical additive 13 into the holder, first an upstream shut off valve 41 and a downstream shut off valve 42 are closed. The upstream shut off valve 41 is located upstream of both the removal device 4 and the dosing unit 11. The downstream shut off valve 42 is located downstream of both the removal device 4 and the dosing unit 11.

After closing both shut off valves 41, 42, the external opening 14 is opened with the closing member 15, see figure 4. Then the tablet containing the chemical additive 13 is positioned in the holder 12 of the dosing unit 11. The external opening 14 is subsequently closed with the closing member 15. Next both shut off valves 41, 42 are opened, thereby allowing the main flow 6 to pass through the removal device 4 and the dosing unit 11. When the flow passes the dosing unit 11, the dissolved portion of the tablet containing the chemical additives 13 joins the flow, thereby providing an improved cleaning and/or protecting method.

Instead of positioning the tablet 13 in the holder 12 when the holder is positioned in the dosing unit 11, it may also be possible to provide a package 200 comprising the holder 12 already containing the tablet, and positioning said package 200 in the dosing unit 11. If a used holder is present in the dosing unit 11, the used holder is removed first before positioning the package 200 in the dosing unit.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

It will be apparent to those skilled in the art that various modifications can be made to the system and method according to the invention without departing from the scope as defined in the claims.

## Claims

1. Combination (100) of a dosing unit (11) and a removal device (4) for removing gas bubbles and/or dirt particles from a liquid in the liquid conduit system or for removing a second liquid from a first liquid in the conduit system, the removal device comprising:
- a main channel (5) for a main flow (6), the main channel having an entry (7) and an exit (8) which are configured to be connected to the liquid conduit system, and
- a housing (9) which defines an inner space (10), wherein the inner space is in fluid communication with the main channel,
the dosing unit comprising:
- a holder (12) which is in fluid communication with the inner space or with the main channel, wherein the holder is configured to accommodate a tablet containing a chemical additive (13), and to dose the chemical additive into the inner space or into the main channel, wherein the holder is provided in an upper end of the inner space of the removal device,
- an external opening (14) through which the holder is manually accessible from the outside,
- a closing member (15) for opening and closing the external opening.
**characterized in that** the removal device is configured to branch off a part (29) of the main flow (6) to the inner space (10),

2. Combination according to claim 1, wherein the dosing unit is directly provided on the removal device, and wherein in particular the dosing unit and the removal device are integrated to form a single product with a common housing (16), and wherein more in particular the common housing of the removal device and the dosing unit comprises the external opening and the closing member.

3. Combination according to claim 1 or 2, wherein the holder is removable from the dosing unit via the external opening.

4. Combination according to any of claims 1-3, wherein the holder comprises the tablet containing the chemical additive.

5. Combination according to any of claims 1-4, wherein the holder is provided in an upper end (24) of the inner space and is manually accessible via the external opening which is provided at a top end (35) of the common housing.

6. Assembly (1) for cleaning and/or protecting a liquid conduit system (2), in particular a closed liquid conduit system of a central heating system (3), comprising:
- a domestic liquid conduit system (2),
- a combination of a dosing unit (11) and a removal device (4) according to claim 1, wherein the entry (7) and the exit (8) of the removal device (4) are connected to the liquid conduit system (2).

7. Assembly according to claim 6, wherein the dosing unit is directly provided on the removal device, and wherein in particular the dosing unit and the removal device are integrated to form a single product with a common housing (16), and wherein more in particular the common housing of the removal device and the dosing unit comprises the external opening and the closing member.

8. Assembly according to claim 6 or 7, wherein the inner space is arranged adjacent to the main channel.

9. Assembly according to any of the preceding assembly claims, wherein the holder is removable from the dosing unit via the external opening.

10. Assembly according to any of the preceding assembly claims, wherein the holder comprises the tablet containing the chemical additive.

11. Assembly according to any of the preceding assembly claims, wherein the holder is manually accessible via the external opening which is provided at a top end (35) of the common housing.

12. Assembly according to any of the preceding assembly claims, wherein the dosing unit and in particular the holder thereof comprises at least one magnet (17) for attracting magnetite particles.

13. Assembly according to any of the preceding assembly claims, wherein the holder, and in particular a base and/or at least one side wall thereof, comprises at least one through hole (25) or recess via which it is in fluid communication with the liquid conduit system or with the main channel or with the inner space of the removal device.

14. Assembly according to any of the preceding assembly claims, wherein the closing member comprises a de-aerator valve (27).

15. Method of cleaning and/or protecting a liquid conduit system, the method comprising:
a) providing an assembly (1) according to any of claims 6-14 or a combination (100) according to any of claims 1-5,
b) opening the external opening with the closing member,
c) providing the tablet containing the chemical additive in the holder,
d) closing the external opening with the closing member,
e) guiding a flow of liquid through the assembly.

## Patentansprüche

1. Kombination (100) einer Dosiereinheit (11) und einer Entfernungsvorrichtung (4) zum Entfernen von Gasblasen und/oder Schmutzpartikeln aus einer Flüssigkeit in dem Flüssigkeitsleitungssystem oder zum Entfernen einer zweiten Flüssigkeit aus einer ersten Flüssigkeit in dem Leitungssystem, die Entfernungsvorrichtung Folgendes umfassend:
- einen Hauptkanal (5) für eine Hauptströmung (6), wobei der Hauptkanal einen Eingang (7) und einen Ausgang (8) aufweist, die dazu ausgelegt sind, mit dem Flüssigkeitsleitungssystem verbunden zu sein, und
- ein Gehäuse (9), das einen Innenraum (10) definiert, wobei der Innenraum in Fluidverbindung mit dem Hauptkanal steht,
die Dosiereinheit Folgendes umfassend:
- einen Halter (12), der in Fluidverbindung mit dem Innenraum oder mit dem Hauptkanal steht, wobei der Halter dazu ausgelegt ist, eine Tablette aufzunehmen, die ein chemisches Additiv (13) enthält, und das chemische Additiv in den Innenraum oder in den Hauptkanal zu dosieren, wobei der Halter in einem oberen Ende des Innenraums der Entfernungsvorrichtung bereitgestellt ist,
- eine Außenöffnung (14), durch die der Halter von außen manuell zugänglich ist;
- ein Schließglied (15) zum Öffnen und Schließen der Außenöffnung,
**dadurch gekennzeichnet, dass** die Entfernungsvorrichtung dazu ausgelegt ist, einen Teil (29) der Hauptströmung (6) in den Innenraum (10) abzuzweigen.

2. Kombination nach Anspruch 1, wobei die Dosiereinheit direkt auf der Entfernungsvorrichtung bereitgestellt ist und wobei insbesondere die Dosiereinheit und die Entfernungsvorrichtung integriert sind, um ein einziges Produkt mit einem gemeinsamen Gehäuse (16) zu bilden, und wobei ganz besonders das gemeinsame Gehäuse der Entfernungsvorrichtung und der Dosiereinheit die Außenöffnung und das Schließglied umfasst.

3. Kombination nach Anspruch 1 oder 2, wobei der Halter über die Außenöffnung von der Dosiereinheit abnehmbar ist.

4. Kombination nach einem der Ansprüche 1 bis 3, wobei der Halter die Tablette umfasst, die das chemische Additiv enthält.

5. Kombination nach einem der Ansprüche 1 bis 4, wobei der Halter in einem oberen Ende (24) des Innenraums bereitgestellt ist und über die Außenöffnung, die an einem oberen Ende (35) des gemeinsamen Gehäuses bereitgestellt ist, manuell zugänglich ist.

6. Anordnung (1) zum Reinigen und/oder Schützen eines Flüssigkeitsleitungssystems (2), insbesondere eines geschlossenen Flüssigkeitsleitungssystems eines zentralen Heizsystems (3), Folgendes umfassend:
- ein Hausflüssigkeitsleitungssystem (2),
- eine Kombination aus einer Dosiereinheit (11) und einer Entfernungsvorrichtung (4) nach Anspruch 1,
wobei der Eingang (7) und der Ausgang (8) der Entfernungsvorrichtung (4) mit dem Flüssigkeitsleitungssystem (2) verbunden sind.

7. Anordnung nach Anspruch 6, wobei die Dosiereinheit direkt auf der Entfernungsvorrichtung bereitgestellt ist und wobei insbesondere die Dosiereinheit und die Entfernungsvorrichtung integriert sind, um ein einziges Produkt mit einem gemeinsamen Gehäuse (16) zu bilden, und wobei ganz besonders das gemeinsame Gehäuse der Entfernungsvorrichtung und der Dosiereinheit die Außenöffnung und das Schließglied umfasst.

8. Anordnung nach Anspruch 6 oder 7, wobei der Innenraum an den Hauptkanal angrenzend angeordnet ist.

9. Anordnung nach einem der vorhergehenden Anordnungsansprüche, wobei der Halter über die Außenöffnung von der Dosiereinheit abnehmbar ist.

10. Anordnung nach einem der vorhergehenden Anordnungsansprüche, wobei der Halter die Tablette umfasst, die das chemische Additiv enthält.

11. Anordnung nach einem der vorhergehenden Anordnungsansprüche, wobei der Halter über die Außenöffnung manuell zugänglich ist, die an einem oberen Ende (35) des gemeinsamen Gehäuses bereitgestellt ist.

12. Anordnung nach einem der vorhergehenden Anordnungsansprüche, wobei die Dosiereinheit und insbesondere ihre Halterung mindestens einen Magneten (17) zum Anziehen von Magnetit-Partikeln umfasst.

13. Anordnung nach einem der vorhergehenden Anordnungsansprüche, wobei der Halter, und insbesondere eine Basis und/oder mindestens eine Seitenwand davon, mindestens ein Durchgangsloch (25) oder eine Aussparung umfasst, über die er in Fluidverbindung mit dem Flüssigkeitsleitungssystem oder mit dem Hauptkanal oder mit dem Innenraum der Entfernungsvorrichtung steht.

14. Anordnung nach einem der vorhergehenden Anordnungsansprüche, wobei das Schließglied ein Entlüfterventil (27) umfasst.

15. Verfahren zum Reinigen und/oder Schützen eines Flüssigkeitsleitungssystems, das Verfahren Folgendes umfassend:
a) Bereitstellen einer Anordnung (1) nach einem der Ansprüche 6 bis 14 oder einer Kombination (100) nach einem der Ansprüche 1 bis 5,
b) Öffnen der Außenöffnung mit dem Schließglied,
c) Bereitstellen der Tablette, die das chemische Additiv enthält, in dem Halter,
d) Schließen der Außenöffnung mit dem Schließglied,
e) Leiten eines Flüssigkeitsstroms durch die Anordnung.

## Revendications

1. Combinaison (100) d'une unité de dosage (11) et d'un dispositif d'élimination (4) pour éliminer des bulles de gaz et/ou des particules de saleté d'un liquide dans le système de conduite de liquide ou pour éliminer un deuxième liquide d'un premier liquide dans le système de conduite, le dispositif d'élimination comprenant :
- un canal principal (5) pour un flux principal (6), le canal principal ayant une entrée (7) et une sortie (8) qui sont configurées pour être reliées au système de conduite de liquide, et
- un boitier (9) qui définit un espace intérieur (10), où l'espace intérieur est en communication fluidique avec le canal principal,
l'unité de dosage comprenant :
- un support (12) qui est en communication fluidique avec l'espace intérieur ou avec le canal principal, où le support est configuré pour recevoir un comprimé contenant un additif chimique (13), et pour ajouter l'additif chimique dans l'espace intérieur ou dans le canal principal, où le support est prévu dans une extrémité supérieure de l'espace intérieur du dispositif d'élimination,
- une ouverture externe (14), à travers laquelle le support est accessible manuellement depuis l'extérieur,
- un élément de fermeture (15) pour ouvrir et fermer l'ouverture externe,
**caractérisée en ce que** le dispositif d'élimination est configuré pour dériver une partie (29) du flux principal (6) vers l'espace intérieur (10),

2. Combinaison selon la revendication 1, dans laquelle l'unité de dosage est prévue directement sur le dispositif d'élimination, et dans laquelle en particulier l'unité de dosage et le dispositif d'élimination sont intégrés pour former un seul produit avec un boîtier commun (16), et dans laquelle en particulier le boîtier commun du dispositif d'élimination et de l'unité de dosage comprend l'ouverture extérieure et l'élément de fermeture.

3. Combinaison selon la revendication 1 ou 2, dans laquelle le support est amovible de l'unité de dosage par l'ouverture externe.

4. Combinaison selon l'une quelconque des revendications 1 à 3, dans laquelle le support comprend le comprimé contenant l'additif chimique.

5. Combinaison selon l'une quelconque des revendications 1 à 4, dans laquelle le support est prévu dans une extrémité supérieure (24) de l'espace intérieur et est accessible manuellement par l'intermédiaire de l'ouverture extérieure qui est prévue au niveau d'une extrémité supérieure (35) du boîtier commun.

6. Ensemble (1) pour le nettoyage et/ou la protection d'un système de conduite de liquide (2), notamment d'un système de conduite fermée de liquide d'un système de chauffage central (3) comprenant :
- un système de conduite de liquide domestique (2),
- une combinaison d'une unité de dosage (11) et d'un dispositif d'élimination (4) selon la revendication 1,
dans lequel l'entrée (7) et la sortie (8) du dispositif d'élimination (4) sont reliées au système de conduite de liquide (2).

7. Ensemble selon la revendication 6, dans lequel l'unité de dosage est prévue directement sur le dispositif d'élimination, et dans lequel en particulier l'unité de dosage et le dispositif d'élimination sont intégrés pour former un seul produit avec un boîtier commun (16), et dans lequel plus particulièrement le boîtier commun du dispositif d'élimination et de l'unité de dosage comprend l'ouverture externe et l'élément de fermeture.

8. Ensemble selon la revendication 6 ou 7, dans lequel l'espace intérieur est agencé de façon adjacente au canal principal.

9. Ensemble selon l'une quelconque des revendications précédentes d'ensemble, dans lequel le support est amovible de l'unité de dosage par l'ouverture externe.

10. Ensemble selon l'une quelconque des revendications précédentes d'ensemble, dans lequel le support comprend le comprimé contenant l'additif chimique.

11. Ensemble selon l'une quelconque des revendications précédentes d'ensemble, dans lequel le support est accessible manuellement par l'ouverture externe qui est prévue au niveau d'une extrémité supérieure (35) du boîtier commun.

12. Ensemble selon l'une quelconque des revendications précédentes d'ensemble, dans lequel l'unité de dosage et notamment son support comprend au moins un aimant (17) destiné à attirer des particules de magnétite.

13. Ensemble selon l'une quelconque des revendications précédentes d'ensemble, dans lequel le support, et en particulier une base et/ou au moins une paroi latérale de celui-ci, comprend au moins un trou traversant (25) ou un évidement par lequel il est en communication fluidique avec le système de conduite de liquide ou avec le canal principal ou avec l'espace intérieur du dispositif d'élimination.

14. Ensemble selon l'une quelconque des revendications précédentes d'ensemble, dans lequel l'élément de fermeture comprend une soupape de désaérateur (27).

15. Procédé de nettoyage et/ou de protection d'un système de conduite de liquide, le procédé comprenant :
a) fournir un ensemble (1) selon l'une quelconque des revendications à 6 à 14 ou une combinaison (100) selon l'une quelconque des revendications 1 à 5,
b) ouvrir l'ouverture externe avec l'élément de fermeture,
c) fournir dans le support le comprimé contenant l'additif chimique,
d) fermer l'ouverture externe avec l'élément de fermeture,
e) guider un flux de liquide à travers l'ensemble.
